# EUROPEAN PATENT SPECIFICATION

(11) **EP 0 434 406 B1**
(45) Date of publication and mention of the grant of the patent: **07.08.1996**
(21) Application number: 90313948.3
(22) Date of filing: 19.12.1990
(51) Int. Cl.: E03F 11/00, E03F 5/14

(54) **Trickle filtration apparatus**
Rieselfiltervorrichtung
Dispositif de filtration de ruissellement

(30) Priority: 19.12.1989 GB 8928588
(43) Date of publication of application: 26.06.1991
(73) Proprietor: ENERGY AND WASTE SYSTEMS LIMITED, Westbury, Wiltshire BA13 4ER (GB)
(72) Inventor: Walpole, Terence Frederick, Ash, Nr. Aldershort, Hampshire GU12 6NP (GB); Wrigley, David, Cobham, Surrey KT11 3AA (GB)
(74) Representative: White, Martin David

(56) References cited:
- EP-A- 0 086 489
- CH-A- 668 252
- GB-A- 2 218 082
- US-A- 3 371 033

## Description

This invention relates to a trickle filtration apparatus for treating raw sewage.

CH-A-668 252, on which the preamble of claim 1 is based, discloses a trickle filtration apparatus comprising: - a sump, a primary settlement tank, a pump chamber, a filter tank and a secondary settlement tank; said primary settlement tank and secondary settlement tank being contained within said sump; said pump chamber being at least partly contained within said sump; said pump chamber containing pump means in the form of at least one pump; said filter tank containing filter media; said secondary settlement tank being arranged side-by-side with the primary settlement tank and separated therefrom by a liquid-proof pressure bulkhead ; the apparatus having an inlet for raw sewage into the primary settlement tank, and a pump chamber-inlet for supernatent from the primary settlement tank into the pump chamber; the pump chamber being sealed from the primary settlement tank except for said pump chamber-inlet; the primary settlement tank having a region at the base of the primary settlement tank for collection of gross solids which settle therein out of the raw sewage; said pump chamber-inlet being at a relatively high level above said region; said primary settlement tank-inlet being at a higher level than said pump chamber-inlet; said pump means being arranged at the bottom of the pump chamber; the pump chamber being positioned adjacent a wall of the sump; said pump chamber inlet being at a far side of the pump chamber from the primary settlement tank-inlet, so that flow from said primary settlement tank-inlet towards the pump chamber inlet is indirect and traverses the primary settlement tank, to allow the settlement of gross solids from the raw sewage to said region at the base of the primary settlement tank; the filter tank being positioned at a higher level than the sump, primary settlement tank and secondary settlement tank; said pump means being adapted to pump supernatent from the bottom of the pump chamber through first conduit means to supernatent-distributing means at the top of the filter tank, for the supernatent to trickle down the filter media; collecting means being provided for collecting the supernatent at the bottom of the filter tank, after the supernatent has trickled down the filter media; and second conduit means to convey the collected supernatent; the secondary settlement tank being adapted and arranged for settlement of flocculents, which are shed from the filter media, in the bottom of the secondary settlement tank; the apparatus having an outlet for treated effluent from the secondary settlement tank; means being provided for removal of settled solids from said region of the primary settlement tank and of settled flocculents from the bottom of the secondary settlement tank; and air circulating means being provided for circulating air through the filter media.

However, the trickle filtration apparatus disclosed in CH-A-668 252 only effects a single treatment of the supernatent, and does not continuously recycle the supernatent.

It is an object of the invention to provide a trickle filtration apparatus for treating raw sewage for a relatively few number of people in a community.

The invention provides a trickle filtration apparatus for treating raw sewage as claimed in independent claim 1.

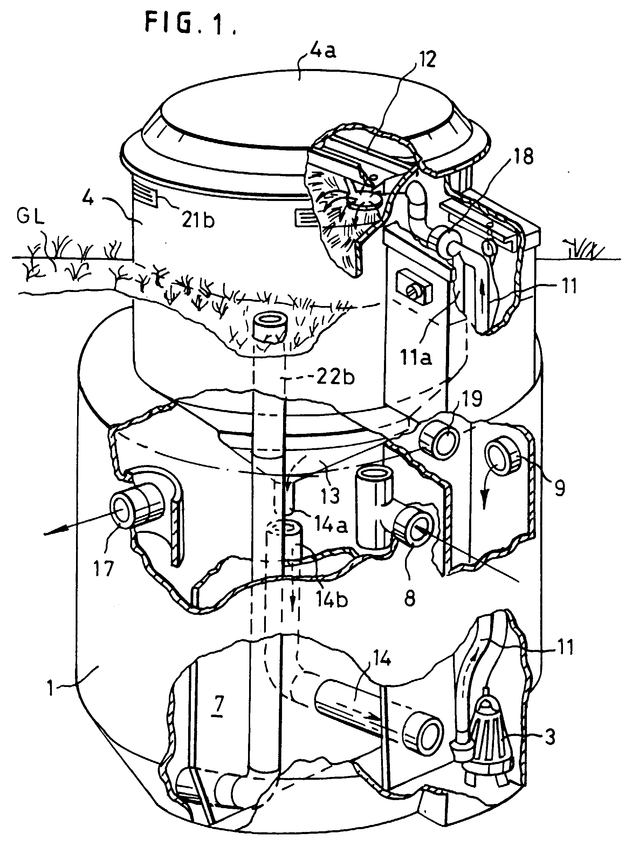

The invention will be described by way of example with reference to the drawings, wherein:-
Fig. 1 is a partly cut-away perspective illustration of a trickle filtration apparatus for treating raw sewage in accordance with the invention, shown sunk into the ground;
Fig. 2 is a diagrammatic vertical section through the apparatus of Fig. 1;
Fig. 3 is a diagrammatic sectional plan view of a sump and pump chamber of the apparatus with a filter media tank removed;
Fig. 4 is another illustration similar to Fig. 2, but the section being on IV-IV of Fig. 5 and showing other features of the apparatus;
Fig. 5 is another illustration similar to Fig. 3, but the section being on V-V of Fig. 4; and
Fig. 6 is a section on VI-VI of Fig. 5.

Referring to the drawings, the illustrated apparatus is designed to be sunk into the ground so that only a top portion of the apparatus is above ground level GL, as shown. The apparatus comprises a sump 1 within which is arranged :-
a) a primary settlement tank 1a,
b) a bottom end portion of a pump chamber 2 containing one or two pumps 3 at the bottom of the pump chamber 2, and
c) a secondary settlement tank or "humus" tank 6 which is side-by-side with the primary settlement tank 1a and which is separated from the primary settlement tank 1a by a liquid-proof pressure bulkhead 7. A filter tank 4 containing filter media 5, is arranged above sump 1 and above settlement tanks 1a, 6 as shown.

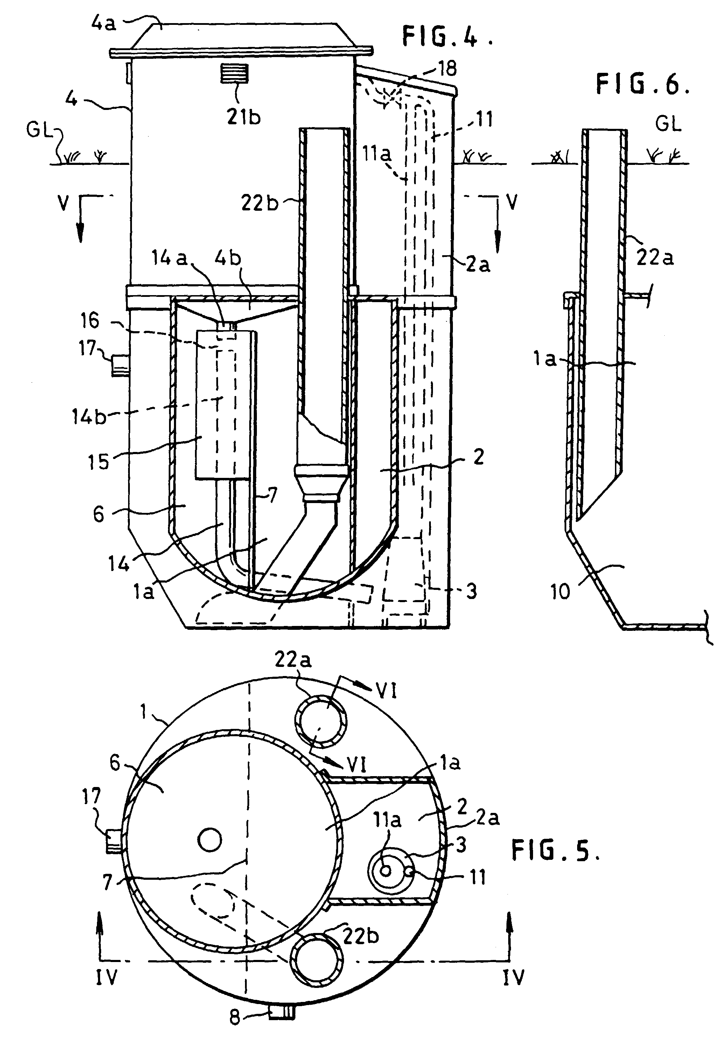

The apparatus has an inlet 8 for raw sewage into the primary settlement tank 1a for the settlement of gross solids (not shown) out of the raw sewage. The pump chamber 2 has an inlet 9 (Fig. 3) for "supernatent" to flow from the septic tank 1 into the pump chamber 2 - "supernatent" being the raw sewage without the gross solids, which have settled as a sludge to the bottom of the primary settlement tank 1a. There is a scum baffle 9a around inlet 9, to stop scum from entering the pump chamber 2. The pump chamber 2 is positioned adjacent a wall 2a of the sump 1 an extends above sump 1 and almost the full height of the filter tank 4 as shown. The pump chamber 2 is sealed from the primary settlement tank 1a except for the pump chamber-inlet 9. As shown, the pump chamber-inlet 9 is at a far side of the pump chamber 2 from the primary settlement tank-inlet 8, so that flow from the primary settlement tank-inlet 8 towards the pump chamber-inlet 9 is indirect and traverses the primary settlement tank 1a, to allow the gross solids (not shown) from the raw sewage to settle to a region 10 at the base of the primary settlement tank 1a and form a sludge there. The gross solids are collected in the region 10 for periodic removal by means described hereinafter. The pump chamber-inlet 9 is at a relatively high level above the region 10, to minimise the chances of any gross solids passing through the pump chamber-inlet 9 into the pump chamber 2. The primary settlement tank-inlet 8 is at a higher level than the pump chamber-inlet 9 in order to provide an hydraulic gradient for forward fluid-flow.

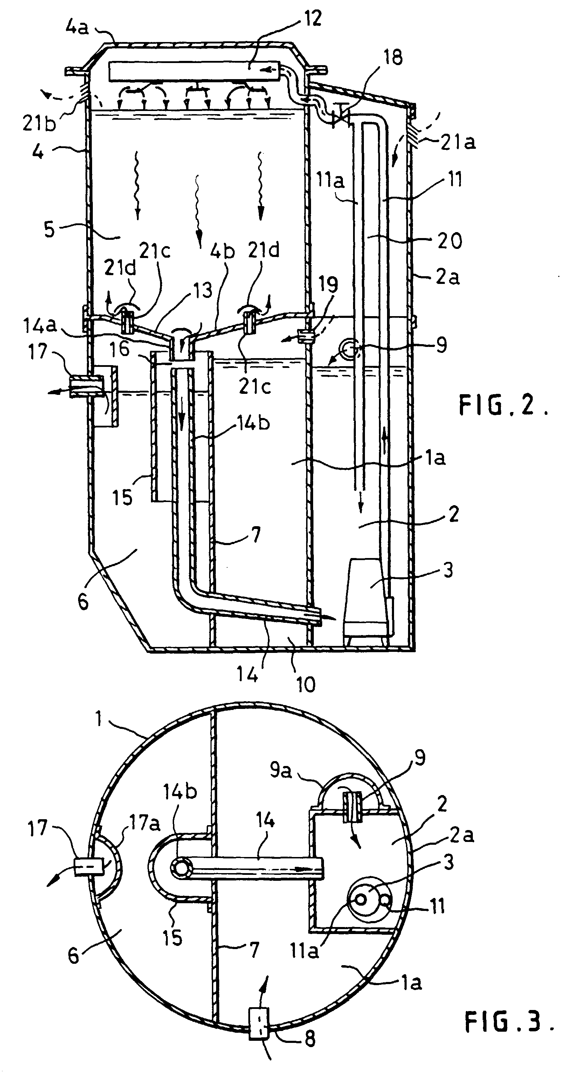

The filter tank 4, which has a "pitched roof" type of cover 4a at the top of the filter tank 4, is arranged above the primary settlement tank 1a and above the secondary settlement tank 6. The filter media 5 is of a known type for supporting a biomass for sewage treatment. If there is only one pump 3, it runs continuously. If there are two pumps 3, they are arranged and adapted to operate alternately continuously, in that one or other of the pumps is always running. Automatic control means (not shown) of known type shares the pumping duty between the two pumps 3 and monitors them so that if either one of the two pumps 3 fails, the other pump takes over. The control for each pump 3, which incorporates a low liquid-level protection switch, pumps supernatent from the base of the pump chamber 2, through a first conduit 11, which is in the form of a flexible hose, to a supernatent-distributing device 12 in the form of a spray device or splash plate distributor device near the top of the filter tank 4, below the cover 4a but above the top of the filter media 5. The conduit 11 extends from the pump/pumps 3 up the interior of the pump chamber 2, out of the top of the pump chamber 2 and up an enclosed space 20 (Fig. 2) outside of the filter tank 4 to the spray device 12. The device 12 ensures a substantially even spray of supernatent over the upper surface area of the filter media 5, for the supernatent to trickle down the filter media 5. Flow rate of supernatent to the distributing device 12 is controlled by a flow diversion valve 18 such that flow entering the distributing device 12 is balanced by that passing forward over the media 5. Diverted supernatent is returned through a second conduit 11a to the base of the pump chamber 2. The filter tank 4 has a downwardly-tapering, eccentric, frusto-conical base 4b, to collect the supernatent after it has trickled down the filter media 5.

The narrow bottom of the frusto-conical base 4b of the filter tank 4 leads into a very short upper portion 14a of a second conduit 14. The second conduit 14 has a gap or break-point 16, located in the secondary settlement tank 6, between the bottom end of the upper conduit portion 14a and the downwardly spaced top end of a lower conduit portion 14b which extends through the bulkhead 7 and which conveys supernatent back into the bottom of the pump chamber 2. The break-point 16, being open to the interior of the secondary settlement tank 6, forms an "hydraulic break" and defines an hydraulic equilibrium level for supernatent in the pump chamber 2. That is to say, when in equilibrium, the level of the supernatent in the pump chamber 2 is the same as the level of the top of the lower conduit portion 14b, which is a little higher than the level of an outlet 17 (see below) from the secondary settlement tank 6.

A "stilling baffle" 15 is arranged in the vicinity of the break-point 16 in the secondary settlement tank 6 for reducing local flow velocity and hence enhancing settlement of flocculents, not shown, which settle as another sludge in the bottom of the secondary settlement tank 6, the flocculents being shed in known manner from the filter media 5 during operation.

The apparatus has an outlet 17 (see above) from the secondary settlement tank 6 for treated effluent (not shown), just below the level of the break-point 16. A scum baffle 17a is arranged adjacent the outlet 17 to prevent scum from passing out of the secondary settlement tank 6 with the treated effluent.

An air flow conduit 19 is provided from the primary settlement tank 1 to the pump chamber 2.

The apparatus has air-circulating means (21) for natural circulation (that is to say, without any air pump or fan) of air through the filter media 5, as described below, for oxygenating the biomass on the filter media 5.

The air-circulating means (21) comprises louvred vents 21a, in the enclosed housing 2a and vents 21b in the filter shell 23. Vent 21a opens into the top of the space 20 and vent 21b opens into a space between the cover 4a and the filter media 5 respectively. These vents 21a, 21b are almost at the very top of the apparatus and must remain above ground level GL when the apparatus is sunk into the ground. The vent 21a communicates with the pump chamber 2, whilst the vent 21b communicates with the top of the filter media 5. The air-circulating means 21 further comprises the air flow conduit 19 between the primary settlement tank 1a and the pump chamber 2. The conduit 19 normally (that is, when not flooded) allows air flow between the pump chamber 2 and the underside of the filter tank 4. Finally, the air-circulating means 21 comprises a number (e.g. three) of vents 21c through the conical base 4b of the filter tank 4, for communication between the conduit 19 and the underside of the filter media 5. The vents 21c in the filter tank base 4a have respective covers 21d to protect them from supernatent dripping from the filter media 5.

The direction of airflow is determined by natural convection and will depend upon temperature differences between different parts of the apparatus.

The primary settlement tank 1a has an inbuilt vertical "de-sludging" pipe 22a for periodical removal (by a tanker, not shown, equipped with a pump) of the sludge formed by the collected gross solids. Likewise, the secondary settlement tank 6 has another inbuilt desludging pipe 22b for the periodical removal of the sludge formed by the settled flocculents either by tanker or by provision of a pump with outlet arranged to return sludge to the manway which immediately preceeds the primary settlement tank inlet 8. The latter de-sludging pipe 22b is bent at its bottom end and projects through the bulkhead 7 as shown. The tops of both de-sludging pipes 22a, 22b project above ground level GL as shown and are normally capped by caps (not shown). For de-sludging, the cap is removed, a hose (not shown) of the above-mentioned tanker (not shown) or secondary sludge removal pump is lowered through the respective pipes 22a, 22b and the sludge is pumped out. Because of the pressure bulkhead 7, either one of the primary and secondary settlement tanks 1 and 6 can be pumped out during de-sludging, without danger of collapse.

In operation, the primary settlment tank 1a is initially filled with water until the pump chamber 2 is flooded and the pump(s) is/are started, to run continuously thereafter. Additional water is added until such time as forward flow from the secondary settlement tank outlet 17 is achieved.

When sewage enters the apparatus at inlet 8, it displaces water at the outlet 17. Any gross solids in the sewage fall to the region 10 at the base of the primary settlement tank 1a, whilst the supernatent (initially diluted, but less and less diluted as more and more sewage enters the apparatus) enters the pump chamber 2, to be pumped to the top of the filter media 5, down which the supernatent trickles. The supernatent trickles at least once down the filter media 5. During a period when no further sewage enters the apparatus, the supernatent is pumped repeatedly by the continuously running pump(s) 3 to the top of the filter media 5, to trickle down the filter media 5 feeding biomass growth on the filter media 5. At the bottom of the filter tank 4, the supernatent enters the conduit 14, to return to the pump chamber 2. Additional sewage entering the apparatus at inlet 8 raises the levels in firstly the primary settlement tank 1a and secondly the pump chamber 2, so that liquid spills over from the top of the lower portion 14b of conduit 14, at the gap or break point 16, into the secondary settlement tank 6, from which treated liquor spills out through the outlet 17. Hence all of the supernatent makes at least one pass down the filter media, while the natural circulation of the air oxygenates the biomass, which grows on the filter media and feeds on nutrients in the supernatent.

## Claims

1. A trickle filtration apparatus comprising:- a sump (1), a primary settlement tank (1a), a pump chamber (2), a filter tank (4) and a secondary settlement tank (6); said primary settlement tank (1a) and secondary settlement tank (6) being contained within said sump (1); said pump chamber (2) being at least partly contained within said sump (1); said pump chamber (2) containing pump means (3) in the form of at least one pump; said filter tank (4) containing filter media (5); said secondary settlement tank (6) being arranged side-by-side with the primary settlement tank (1a) and separated therefrom by a liquid-proof pressure bulkhead (7); the apparatus having an inlet (8) for raw sewage into the primary settlement tank (1a), and a pump chamber-inlet (9) for supernatent from the primary settlement tank (1a) into the pump chamber (2); the pump chamber (2) being sealed from the primary settlement tank (1a) except for said pump chamber-inlet (9); the primary settlement tank (1a) having a region (10) at the base of the primary settlement tank (1a) for collection of gross solids which settle therein out of the raw sewage; said pump chamber-inlet (9) being at a relatively high level above said region (10); said primary settlement tank-inlet (8) being at a higher level than said pump chamber-inlet (9); said pump means (3) being arranged at the bottom of the pump chamber (2); the pump chamber (2) being positioned adjacent a wall (2a) of the sump (1); said pump chamber inlet (9) being at a far side of the pump chamber (2) from the primary settlement tank-inlet (8), so that flow from said primary settlement tank-inlet (8) towards the pump chamber inlet (9) is indirect and traverses the primary settlement tank (1a), to allow the settlement of gross solids from the raw sewage to said region (10) at the base of the primary settlement tank (1a); the filter tank (4) being positioned at a higher level than the sump (1), primary settlement tank (1a) and secondary settlement tank (6); said pump means (3) being adapted to pump supernatent from the bottom of the pump chamber (2) through first conduit means (11) to supernatent-distributing means (12) at the top of the filter tank (4), for the supernatent to trickle down the filter media (5); collecting means (4b) being provided for collecting the supernatent at the bottom of the filter tank (4), after the supernatent has trickled down the filter media (5); and second conduit means (14) to convey the collected supernatent; the secondary settlement tank (6) being adapted and arranged for settlement of flocculents, which are shed from the filter media (5), in the bottom of the secondary settlement tank (6); the apparatus having an outlet (17) for treated effluent from the secondary settlement tank (6); means being provided for removal of settled solids from said region (10) of the primary settlement tank (1a) and of settled flocculents from the bottom of the secondary settlement tank (6); and air circulating means (21) being provided for circulating air through the filter media (5); characterised in that said pump chamber (2) extends above the the primary settlement tank (1a) nearly to the top of the filter tank (4); said pump means (3) is adapted and arranged to operate continuously, so as to recycle the supernatent; said filter tank (4) is directly above said secondary settlement tank (6); said second conduit means (14) comprising an upper conduit (14a) and a lower conduit (14b); a bottom end of said upper conduit (14a) being arranged directly above and spaced apart from a top end of said lower conduit (14b) to form an hydraulic break (16) therebetween in the secondary settlement tank; said hydraulic break (16) defining an hydraulic equilibrium level for fluid in the pump chamber (2); said lower conduit (14b) being adapted and arranged to convey supernatent back into the base of the pump chamber (2).

2. A trickle filtration apparatus as claimed in claim 1, wherein said region (10) at the base (4b) of the filter tank (4) is defined by the shape of the base (4b) itself, which is substantially conical .

3. A trickle filtration apparatus as claimed in claim 1 or 2, wherein said second conduit (14) means extends through the bulkhead (7).

4. A trickle filtration apparatus as claimed in any preceding claim, wherein said first conduit means (11) extends up the outside of the filter tank (4), within the pump chamber (2).

5. A trickle filtration apparatus as claimed in any preceding claim, wherein a flow diversion means (18) is provided to adjust flow rate of supernatent to the distributing device (12) in the filter tank (4) and to return diverted supernatent through a second conduit means (11a) to the base of the pump chamber (2).

6. A trickle filtration apparatus as claimed in any preceding claim, wherein said air circulating means (21) is adapted for the air to circulate naturally.

7. A trickle filtration apparatus as claimed in any preceding claim, wherein said air circulating means (21) comprises air passageways (21c) in the base of the filter tank (4), said air passageways (21c) being protected from supernatent dripping from the filter media.

8. A trickle filtration apparatus as claimed in any preceding claim, wherein an air flow conduit (19) is provided from the primary settlement tank (1a) to the pump chamber (2).

9. A trickle filtration apparatus as claimed in any preceding claim, wherein said pump means (3) comprises two pumps with means for switching only one pump on at a time.

10. A trickle filtration apparatus as claimed in any preceding claim, wherein a stilling means (15) is arranged in the vicinity of said break point (16) in the secondary settlement tank (6) for reducing local flow velocity and hence enhancing the settlement of flocculents, which are shed from the filter media (5), in the secondary settlement tank (6).

## Patentansprüche

1. Rieselfiltervorrichtung, die folgende Komponenten aufweist: einen Sammelbehälter (1), ein primäres Absetzbecken (1a), einen Schöpfraum (2), einen Filtertank (3) und ein sekundäres Absetzbecken (6); wobei sich das primäre Absetzbecken (1a) und das sekundäre Absetzbecken (6) in dem Sammelbehälter (1) befinden; wobei sich der Schöpfraum (2) zumindest teilweise in dem Sammelbehälter (1) befindet; wobei sich im Schöpfraum (2) ein Pumpenmittel (3) in Form von wenigstens einer Pumpe befindet; wobei der Filtertank (4) Filtermedien (5) enthält; wobei das sekundäre Absetzbecken (6) Seite an Seite mit dem primären Absetzbecken (1a) angeordnet und von diesem durch eine flüssigkeitsdichte Druckwand (7) getrennt ist; wobei die Vorrichtung einen Einlaß (8) für das Rohabwasser in das primäre Absetzbecken (1a) und einen Schöpfraum-Einlaß (9) für das Faulwasser aus dem primären Absetzbecken (1a) in den Schöpfraum (2) hat; wobei der Schöpfraum (2) mit Ausnahme des Schöpfraum-Einlaßes (9) gegenüber dem primären Absetzbecken (1a) abgedichtet ist; wobei das primäre Absetzbecken (1a) an der Basis des primären Absetzbeckens (1a) einen Bereich (10) zum Auffangen von groben Feststoffen hat, die sich in diesem aus dem Rohabwasser absetzen; wobei der Schöpfraum-Einlaß (9) verhältnismäßig hoch über dem genannten Bereich (10) angeordnet ist; wobei der Einlaß (8) des primären Absetzbeckens höher als der Schöpfraum-Einlaß (9) angeordnet ist; wobei das Pumpenmittel (3) am Boden des Schöpfraums (2) angeordnet ist; wobei der Schöpfraum (2) angrenzend an eine Wand (2a) des Sammelbehälters (1) angeordnet ist; wobei sich der Schöpfraum-Einlaß (9) an der Seite des Schöpfraums (2) befindet, die vom Einlaß (8) des primären Absetzbeckens entfernt ist, so daß der Strom vom Einlaß (8) des primären Absetzbeckens zum Schöpfraum-Einlaß (9) ein indirekter Strom ist und durch das primäre Absetzbecken (1a) führt, um das Absetzen der groben Feststoffe aus dem Rohabwasser in dem genannten Bereich (10) an der Basis des primären Absetzbeckens (1a) zu ermöglichen; wobei der Filtertank (4) höher als der Sammelbehälter (1), das primäre Absetzbecken (1a) und das sekundäre Absetzbecken (6) angeordnet ist; wobei das Pumpenmittel (3) geeignet ist, das Faulwasser vom Boden des Schöpfraums (2) durch ein erstes Rohrleitungsmittel (11) zu einem Faulwasser-Verteilermittel (12) an der Oberseite des Filtertanks (4) zu pumpen, damit das Faulwasser durch die Filtermedien (5) nach unten sickern kann; wobei Auffangmittel (4b) vorhanden sind, um das Faulwasser am Boden des Filtertanks (4) zu sammeln, nachdem das Faulwasser durch die Filtermedien (5) nach unten gesickert ist; und ein zweites Rohrleitungsmittel (14), um das aufgefangene Faulwasser weiterzuleiten; wobei das sekundäre Absetzbecken (6) in der Lage und so angeordnet ist, daß sich im Boden des sekundären Absetzbeckens (6) Flockungsmittel absetzen können, die von den Filtermedien (5) abgelöst werden; wobei die Vorrichtung einen Auslaß (19) für den behandelten Ausfluß aus dem sekundären Absetzbecken (6) hat; wobei Mittel vorhanden sind, um die abgesetzten Feststoffe aus dem genannten Bereich (10) des primären Absetzbeckens (1a) und die abgesetzten Flockungsmittel aus dem Boden des sekundären Absetzbeckens (6) zu entfernen; und wobei Luftzirkulationsmittel (21) vorhanden sind, um Luft durch die Filtermedien (5) zirkulieren zu lassen; dadurch gekennzeichnet, daß der Schöpfraum (2) über den primären Absetzbecken (1a) bis annähernd zur Oberseite des Filtertanks (4) reicht; daß das Pumpenmittel (3) in der Lage und so angeordnet ist, daß es kontinuierlich arbeiten kann, um so das Faulwasser im Kreislauf zu führen; daß der Filtertank (4) sich direkt über dem sekundären Absetzbecken (6) befindet; daß das zweite Rohrleitungsmittel (14) eine obere Rohrleitung (14a) und eine untere Rohrleitung (14b) umfaßt; wobei ein unteres Ende der oberen Rohrleitung (14a) direkt über und im Abstand zu dem oberen Ende der unteren Rohrleitung (14b) angeordnet ist, um dazwischen im sekundären Absetzbecken einen hydraulischen Bruch (16) zu bilden, wobei der hydraulische Bruch (16) einen hydraulischen Gleichgewichtspegel für die Flüssigkeit im Schöpfraum (2) definiert; wobei die untere Rohrleitung (14b) in der Lage und so angeordnet ist, daß sie das Faulwasser zurück in die Basis des Schöpfraums (2) transportieren kann.

2. Rieselfiltervorrichtung nach Anspruch 1, bei welcher der genannte Bereich (10) an der Basis (4b) des Filtertanks (4) durch die Form der Basis (4b) selbst definiert ist, die im wesentlichen konisch ist.

3. Rieselfiltervorrichtung nach Anspruch 1 oder 2, bei der das zweite Rohrleitungsmittel (14) durch die Druckwand (7) führt.

4. Rieselfiltervorrichtung nach einem der vorhergehenden Ansprüche, bei der das erste Rohrleitungsmittel (11) innerhalb des Schöpfraums (2) bis zur Außenseite des Filtertanks (4) reicht.

5. Rieselfiltervorrichtung nach einem der vorhergehenden Ansprüche, bei der ein Durchfluß-Ablenkmittel (18) vorhanden ist, um die Durchflußgeschwindigkeit des Faulwassers zu dem Verteilermittel (12) im Filtertank (4) zu regulieren und um das abgelenkte Faulwasser durch eine zweite Rohrleitung (11a) zur Basis des Schöpfraums (2) zurückzuführen.

6. Rieselfiltervorrichtung nach einem der vorhergehenden Ansprüche, bei der das Luftzirkulationsmittel (21) in der Lage ist, die Luft natürlich zirkulieren zu lassen.

7. Rieselfiltervorrichtung nach einem der vorhergehenden Ansprüche, bei der das Luftzirkulationsmittel (21) Luftdurchführungen (21c) in der Basis des Filtertanks (4) aufweist, wobei die Luftdurchführungen (21c) gegenüber dem Faulwasser geschützt sind, das aus den Filtermedien sickert.

8. Rieselfiltervorrichtung nach einem der vorhergehenden Ansprüche, bei der eine Rohrleitung für den Luftstrom (19) vom primären Absetzbecken (1a) zum Schöpfraum (2) führt.

9. Rieselfiltervorrichtung nach einem der vorhergehenden Ansprüche, bei der das Pumpenmittel (3) zwei Pumpen mit einem Mittel zum Schalten von jeweils nur einer Pumpe umfaßt.

10. Rieselfiltervorrichtung nach einem der vorhergehenden Ansprüche, bei der in der Nähe der Bruchstelle (16) im sekundären Absetzbecken (6) ein Tosmittel (15) vorhanden ist, um die lokale Durchflußgeschwindigkeit zu verringern und folglich das Absetzen der Flockungsmittel zu verbessern, die im sekundären Absetzbecken (6) von den Filtermedien (5) abgelöst werden.

## Revendications

1. Dispositif de filtration à ruissellement comprenant: un puisard (1), un réservoir primaire de décantation (1a), une chambre d'aspiration (2), un réservoir de filtrage (4) et un réservoir secondaire de décantation (6); ledit réservoir primaire de décantation (1a) et ledit réservoir secondaire de décantation (6) étant contenus dans ledit puisard (1); ladite chambre d'aspiration (2) étant au moins partiellement contenue dans ledit puisard (1); ladite chambre d'aspiration (2) contenant un moyen de pompage (3) sous forme d'au moins une pompe; ledit réservoir de filtrage (4) contenant une matière filtrante (5); ledit réservoir secondaire de décantation (6) étant agencé à côté du réservoir primaire de décantation (1a) et séparé de celui-ci par une cloison étanche aux liquides (7); le dispositif comportant un orifice d'entrée (8) des eaux usées non traitées dans le réservoir primaire de décantation (1a) et un orifice d'entrée de la chambre d'aspiration (9) pour le liquide surnageant provenant du réservoir primaire de décantation (1a) et entrant dans la chambre d'aspiration (2); la chambre d'aspiration (2) étant séparée de façon étanche du réservoir primaire de décantation (1a) à l'exception dudit orifice d'entrée de la chambre d'aspiration (9); le réservoir primaire de décantation (1a) comportant une région (10) au niveau de la base du réservoir primaire de décantation (1a) pour la collecte de solides grossiers qui s'y déposent à partir des eaux usées non traitées; ledit orifice d'entrée de la chambre d'aspiration (9) étant situé à un niveau relativement élevé au-dessus de ladite région (10); ledit orifice d'entrée du réservoir primaire de décantation (8) étant situé à un niveau plus élevé que ledit orifice d'entrée de la chambre d'aspiration (9); ledit moyen de pompage (3) étant agencé au fond de la chambre d'aspiration (2); la chambre d'aspiration (2) étant positionnée près d'une paroi (2a) du puisard (1); ledit orifice d'entrée de la chambre d'aspiration (9) étant situé sur un côté de la chambre d'aspiration (2) éloigné de l'orifice d'entrée du réservoir primaire de décantation (8), de sorte que l'écoulement dudit orifice d'entrée du réservoir primaire de décantation (8) vers l'orifice d'entrée de la chambre d'aspiration (9) est indirect et traverse le réservoir primaire de décantation (1a), pour permettre le dépôt des solides grossiers provenant des eaux usées non traitées dans ladite région (10) au niveau de la base du réservoir primaire de décantation (1a); le réservoir de filtrage (4) étant positionné à un niveau plus élevé que le puisard (1), le réservoir primaire de décantation (1a) et le réservoir secondaire de décantation (6); ledit moyen de pompage (3) servant à pomper le liquide surnageant du fond de la chambre d'aspiration (2) à travers un premier moyen de conduit (11) vers un moyen de distribution du liquide surnageant (12) situé en haut du réservoir de filtrage (4), pour que le liquide surnageant puisse ainsi ruisseler le long de la matière filtrante (5); un moyen collecteur (4b) étant prévu pour collecter le liquide surnageant au fond du réservoir de filtrage (4), après le ruissellement du liquide surnageant le long de la matière filtrante (5); et un deuxième moyen de conduit (14) pour le transfert du liquide surnageant collecté; le réservoir secondaire de décantation (6) étant conçu et agencé de sorte à servir de dépôt des floculants, séparés de la matière filtrante (5), au fond du réservoir secondaire de décantation (6); le dispositif comportant un orifice de sortie (17) de l'effluent traité provenant du réservoir secondaire de décantation (6); un moyen étant prévu pour éliminer les solides déposés de ladite région (10) du réservoir primaire de décantation (1a) et des floculants déposés au fond du réservoir secondaire de décantation (6); un moyen de circulation d'air (21) étant prévu pour faire circuler l'air à travers la matière filtrante (5); caractérisé en ce que ladite chambre d'aspiration (2) s'étend au-dessus du réservoir primaire de décantation (1a), presque jusqu'en haut du réservoir de filtrage (4); ledit moyen de pompage (3) étant destiné et agencé de sorte à fonctionner en continu, de sorte à recycler le liquide surnageant; ledit réservoir de filtrage (4) étant agencé directement au-dessus dudit réservoir secondaire de décantation (6); ledit deuxième moyen de conduit (14) comprenant un conduit supérieur (14a) et un conduit inférieur (14b); une extrémité inférieure dudit conduit supérieur (14a) étant agencé directement au-dessus d'une extrémité supérieure dudit conduit inférieur (14b) et espacée de celle-ci pour former un point de rupture hydraulique (16) entre elles dans le réservoir secondaire de décantation; ledit point de rupture hydraulique (16) définissant un niveau d'équilibre hydraulique pour le fluide dans la chambre d'aspiration (2); ledit conduit inférieur (14b) étant conçu et agencé de sorte à ramener le liquide surnageant vers la base de la chambre d'aspiration (2).

2. Dispositif de filtration à ruissellement selon la revendication 1, dans lequel ladite région (10) au niveau de la base (4) du réservoir de filtrage (4) et définie par la forme de la base même (4b), celle-ci étant pratiquement conique.

3. Dispositif de filtration à ruissellement selon les revendications 1 ou 2, dans lequel ledit deuxième moyen de conduit (14) s'étend à travers la cloison étanche (7).

4. Dispositif de filtration à ruissellement selon l'une quelconque des revendications précédentes, dans lequel ledit premier moyen de conduit (11) s'étend le long de l'extérieur du réservoir de filtrage (4) dans la chambre d'aspiration (2).

5. Dispositif de filtration à ruissellement selon l'une quelconque des revendications précédentes, dans lequel un moyen de dérivation de l'écoulement (18) est prévu pour ajuster la vitesse d'écoulement du liquide surnageant vers le dispositif distributeur (12) dans le réservoir de filtrage (4) et pour ramener le liquide surnageant dérivé à travers un deuxième moyen de conduit (11a) vers la base de la chambre d'aspiration (2).

6. Dispositif de filtration à ruissellement selon l'une quelconque des revendications précédentes, dans lequel ledit moyen de circulation d'air (21) sert à assurer une circulation naturelle de l'air.

7. Dispositif de filtration à ruissellement selon l'une quelconque des revendications précédentes, dans lequel ledit moyen de circulation d'air (21) comprend des passages d'air (21c) dans la base du réservoir de filtrage (4), lesdits passages d'air (21c) étant protégés du liquide surnageant s'égouttant de la matière filtrante.

8. Dispositif de filtration à ruissellement selon l'une quelconque des revendications précédentes, dans lequel un conduit d'écoulement d'air (19) est agencé entre le réservoir primaire de décantation (1a) et la chambre d'aspiration (2).

9. Dispositif de filtration à ruissellement selon l'une quelconque des revendications précédentes, dans lequel ledit moyen de pompage (3) comprend deux pompes avec un moyen permettant de ne commuter qu'une pompe à la fois.

10. Dispositif de filtration à ruissellement selon l'une quelconque des revendications précédentes, dans lequel un moyen d'amortissement (15) est agencé au voisinage dudit point de rupture (16) dans le réservoir secondaire de décantation (6) pour réduire la vitesse d'écoulement local et améliorer par suite le dépôt des floculants, qui sont séparés de la matière filtrante (5) dans le réservoir de décantation secondaire (6).
